# EUROPEAN PATENT APPLICATION

(11) **EP 3 879 451 A2**
(43) Date of publication of application: **15.09.2021**
(21) Application number: 21178932.6
(22) Date of filing: 11.06.2021
(51) Int. Cl.: G06K 9/34

(54) **IMAGE MODERATION METHOD, IMAGE MODERATION APPARATUS, ELECTRONIC DEVICE, AND STORAGE MEDIUM**

(30) Priority: 29.06.2020 CN 202010606433
(71) Applicant: BEIJING BAIDU NETCOM SCIENCE AND TECHNOLOGY CO. LTD., 100085 Beijing (CN)
(72) Inventor: SUN, Hao, Beijing (CN)
(74) Representative: advotec.

(57) **Abstract**

The disclosure discloses an image moderation method. The solution includes: obtaining a target image to be moderated; labeling the target image to obtain multiple pieces of label information of the target image; obtaining at least one service vertical category to which the target image is to be launched; recognizing whether the multiple pieces of label information contain label information excluded by the service vertical category; and determining that the target image is a forbidden image in the service vertical category in a case that the multiple pieces of label information contain the label information excluded by the service vertical category.

## Description

### FIELD

Embodiments of the disclosure relate to a field of image processing technologies and particularly to a field of deep learning, artificial intelligence, computer vision and natural language processing technologies.

### BACKGROUND

In recent years, with popularity of camera terminals, vigorous development of self-media and abundance of Internet resources, publishing a video or an image becomes an important way for a user to entertain and communicate. At the same time, a demand for image moderation on a platform such as a social media, a forum, a live streaming website comes into being. Accurately moderating every frame of a video or a picture uploaded by the user may play an important role in ensuring the health of network information and safeguarding copyright. Therefore, how to improve the accuracy of image moderation becomes one of important research directions.

### SUMMARY

The disclosure provides an image moderation method, an image moderation apparatus, an electronic device, and a storage medium.

According to a first aspect, an image moderation method is provided. The method includes: obtaining a target image to be moderated; labeling the target image to obtain a plurality of pieces of label information of the target image; obtaining at least one service vertical category to which the target image is to be launched; recognizing whether the plurality of pieces of label information contain label information excluded by the service vertical category; and determining that the target image is a forbidden image in the service vertical category in a case that the plurality of pieces of label information contain the label information excluded by the service vertical category.

According to a second aspect, an image moderation apparatus is provided. The apparatus includes: a target image obtaining module, a label information obtaining module, a service vertical category obtaining module, a first recognizing module, and a determining module. The target image obtaining module is configured to obtain a target image to be moderated. The label information obtaining module is configured to label the target image to obtain a plurality of pieces of label information of the target image. The service vertical category obtaining module is configured to obtain at least one service vertical category to which the target image is to be launched. The first recognizing module is configured to recognize whether the plurality of pieces of label information contain label information excluded by the service vertical category. The determining module is configured to determine that the target image is a forbidden image in the service vertical category in a case that the plurality of pieces of label information contain the label information excluded by the service vertical category.

According to a third aspect, an electronic device is provided. The electronic device includes: at least one processor and a memory. The memory is communicatively coupled to the at least one processor. The memory is configured to store instructions executable by the at least one processor. The at least one processor is caused to implement the image moderation method according to the first aspect of the disclosure when the instructions are executed by the at least one processor.

According to a fourth aspect, a non-transitory computer readable storage medium having computer instructions stored thereon is provided. The computer instructions are configured to cause a computer to execute the image moderation method according to the first aspect of the disclosure.

Embodiments provided in the disclosure have at least following beneficial technical effects.

According to the image moderation method of embodiments of the disclosure, the target image to be moderated may be obtained. The target image is labeled to obtain the multiple pieces of label information of the target image. The at least one service vertical category to which the target image is to be launched is obtained. It is recognized whether the multiple pieces of label information contain the label information excluded by the service vertical category. It is determined that the target image is the forbidden image in the service vertical category in a case that the multiple pieces of label information contain the label information excluded by the service vertical category, thereby implementing moderation processing for the image. In this way, with the disclosure, by obtaining the multiple pieces of label information of the target image at the same time, it may be dynamically moderated for different service vertical categories whether the target image is forbidden, different moderation results of the target image under the multiple service vertical categories are obtained, thereby improving the flexibility and accuracy of image moderation, and achieving the purpose of more appropriate image moderation for different service vertical categories.

It should be understood that, the content described in the Summary is not intended to identify key or important features of embodiments of the disclosure, nor is it intended to limit the scope of the disclosure. Other features of the disclosure will become apparent from the following description.

### BRIEF DESCRIPTION OF THE DRAWINGS

The accompanying drawings are used for better understanding the solution and do not constitute a limitation of the disclosure.
FIG. 1 is a flow chart according to a first embodiment of the disclosure.
FIG. 2 is a schematic diagram illustrating multiple pieces of label information of a target image.
FIG. 3 is a flow chart according to a second embodiment of the disclosure.
FIG. 4 is a schematic diagram illustrating an image segment.
FIG. 5 is a schematic diagram illustrating multiple pieces of label information of another target image.
FIG. 6 is a flow chart according to a third embodiment of the disclosure.
FIG. 7 is a flow chart according to a fourth embodiment of the disclosure.
FIG. 8 is a schematic diagram illustrating text information of a target image.
FIG. 9 is a schematic diagram illustrating text information of another target image.
FIG. 10 is a flow chart according to a fifth embodiment of the disclosure.
FIG. 11 is a block diagram illustrating an image moderation apparatus for implementing an image moderation method according to embodiments of the disclosure.
FIG. 12 is a block diagram illustrating an image moderation apparatus for implementing an image moderation method according to embodiments of the disclosure.
FIG. 13 is a block diagram illustrating an electronic device for implementing an image moderation method according to embodiments of the disclosure.

### DETAILED DESCRIPTION

Description will be made below to exemplary embodiments of the disclosure with reference to accompanying drawings, which includes various details of embodiments of the disclosure to facilitate understanding and should be regarded as merely examples. Therefore, it should be recognized by the skilled in the art that various changes and modifications may be made to the embodiments described herein. Meanwhile, for clarity and conciseness, descriptions for well-known functions and structures are omitted in the following description.

Description will may be made below to an image moderation method, an image moderation apparatus, an electronic device, and a storage medium according to embodiments of the disclosure with reference to accompanying drawings.

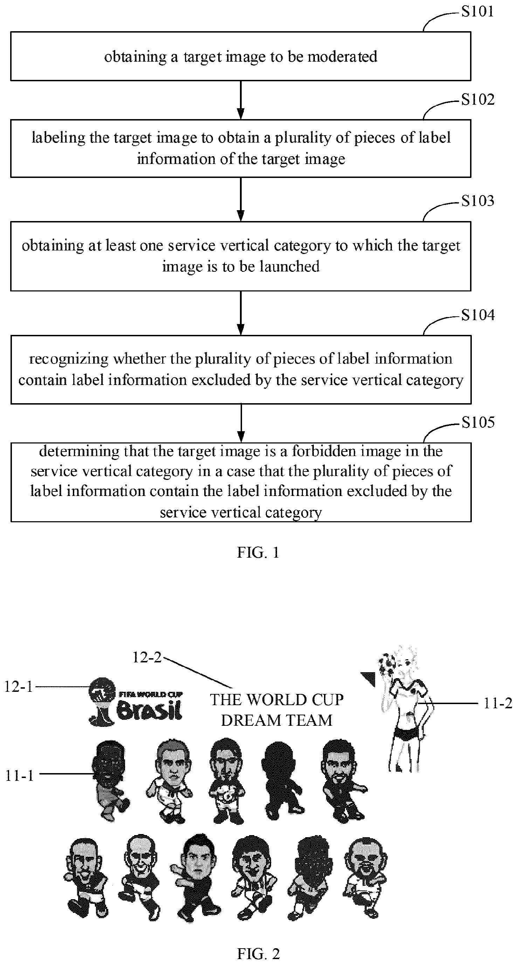

FIG. 1 is a flow chart according to a first embodiment of the disclosure. It should be noted that, an executive subject of the image moderation method in some embodiment may be an image moderation apparatus. The image moderation apparatus may be a hardware device or software in the hardware device. For example, the hardware device may be a terminal device, and a server. As illustrated in FIG. 1, the image moderation method provided in some embodiments includes the following.

At block S101, a target image to be moderated is obtained.

The target image to be moderated may be any image. For example, decoding and frame extraction may be performed on any video, such as a teaching video, a film and a video of television play work, to obtain images. Any one of the images may be selected as the target image.

It should be noted that when obtaining the target image, an image pre-stored in local or a remote storage area may be obtained as the target image, or an image may be directly captured as the target image. In some embodiments, a video or an image may be obtained from at least one of a local or remote video library and an image library to acquire a target image. In some embodiments, an image may be directly captured as the target image. The way for obtaining the target image to be moderated is not limited in embodiments of the disclosure, and may be selected based on an actual situation.

At block S 102, the target image is labeled to obtain multiple pieces of label information of the target image.

Labeling refers to a process of adding a detailed and specific label to the image to supplement image content classification through deep learning technologies.

In some embodiments of the disclosure, the target image may be inputted into at least one pre-trained model, to label the target image to obtain the multiple pieces of label information of the target image.

For example, as illustrated in FIG. 2, by labeling the target image, entity labels of the target image such as a football star, a soccer, and a woman may be obtained, and labels representing semantic content of the image such as sexy, and a football match may also be obtained. As illustrated in FIG. 2, multiple pieces of label information such as an overseas football star 11-1, a sexy football baby 11-2, a football 12-1, a football match 12-2 may be labeled for the target image.

At block S103, at least one service vertical category to which the target image is to be launched is obtained.

The service vertical category may include, but is not limited to, at least one of: a tourism vertical category, a sports vertical category, an animation vertical category and a teaching vertical category.

It should be noted that, services belonging to the same service vertical category focus on serving similar user groups, and also have similar attention directions and scales of image moderation. Accordingly, different service vertical categories have different attention directions and scales of image moderation for the same target image.

For example, a basketball game live service and a football forum service belong to the same service vertical category, and also have similar attention directions and scales of image moderation. A children reading service of science knowledge and a broadcasting service of a star reality show belong to different service vertical categories, and have different attention directions and scales of image moderation.

At block S104, it is recognized whether the multiple pieces of label information contain label information excluded by the service vertical category.

In some embodiments of the disclosure, after the multiple pieces of label information of the target image and the at least one service vertical category to which the target image is to be launched is obtained, it may be recognized whether the label information excluded by the service vertical category is contained in the multiple pieces of label information based on a preset image moderation standard.

The image moderation standard at least includes the label information excluded by the service category. For example, label information excluded by a teaching vertical category may be set as sexy, suicide, violence, etc.

At block S105, it is determined that the target image is a forbidden image in the service vertical category in a case that the multiple pieces of label information contain the label information excluded by the service vertical category.

It should be noted that, the target image may be determined as the forbidden image merely in the service vertical category when the multiple pieces of label information contain the label information excluded by the service vertical category.

For example, when the label information of the target image is a sexy football baby, the target image is determined as a forbidden image in the teaching vertical category, but the target image is determined as a qualified (non-forbidden) image in the sports vertical category.

With the image moderation method according to embodiments of the disclosure, the target image to be moderated may be obtained. The target image is labeled to obtain the multiple pieces of label information of the target image. The at least one service vertical category to which the target image is to be launched is obtained. It is recognized whether the multiple pieces of label information contain the label information excluded by the service vertical category. It is determined that the target image is the forbidden image in the service vertical category in a case that the multiple pieces of label information contain the label information excluded by the service vertical category, thereby implementing moderation processing for the image. In this way, with the disclosure, by obtaining the multiple pieces of label information of the target image at the same time, it may be dynamically moderated for different service vertical categories whether the target image is forbidden, different moderation results of the target image under the multiple service vertical categories are obtained, thereby improving the flexibility and accuracy of image moderation, and achieving the purpose of appropriate image moderation for different service vertical categories.

It should be noted that, in the disclosure, when obtaining the multiple pieces of label information of the target image, the target image may be segmented to obtain at least one image segment, and then the image segment is inputted into a recognition channel corresponding to the image segment to obtain the multiple pieces of label information of the target image.

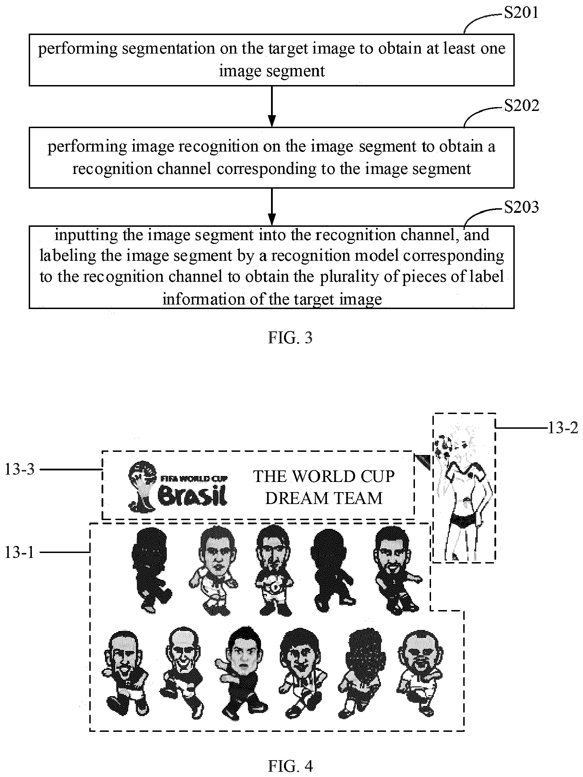

As a possible implementation, as illustrated in FIG. 3, on the basis of the above embodiments, the process of obtaining the multiple pieces of label information of the target image at block S102 specifically includes the following.

At block S201, segmentation is performed on the target image to obtain at least one image segment.

In some embodiments, connected component recognition may be performed on the target image to obtain relevance of contents in each connected component is obtained, and the target image is segmented according to the relevance to obtain the at least one image segment.

The connected component generally refers to an image domain (Blob) composed of foreground pixels having a same pixel value and located at adjacent positions in the image. The connected component recognition refers to a process of finding and marking each connected component in an image. In other words, a foreground target may be extracted, so that the connected component recognition method is able to be used in an application scene of subsequent processing. Generally, an object processed by the connected component recognition is a binarized image.

For example, as illustrated in FIG. 4, the target image illustrated in FIG. 2 may be segmented, to obtain image segments 13-1 to 13-3.

At block S202, image recognition is performed on the image segment to obtain a recognition channel corresponding to the image segment.

The recognition channel refers to a channel containing a recognition model for performing image recognition on the image segment, such as a channel including a scene recognition model, a channel including a character recognition model, a channel including an item recognition model, and a channel including an animal recognition model.

It should be noted that, one image segment may correspond to multiple recognition channels, that is, one image segment may correspond to multiple recognition models. For example, a recognition channel corresponding to the image segment 13-2 illustrated in FIG. 4 may be the character recognition model and the item recognition model.

At block S203, the image segment is inputted into the recognition channel, and the image segment is labeled by a recognition model corresponding to the recognition channel to obtain the multiple pieces of label information of the target image.

It should be noted that, the image segment may be input into the multiple recognition channels in turn when the image segment corresponds to multiple recognition channels.

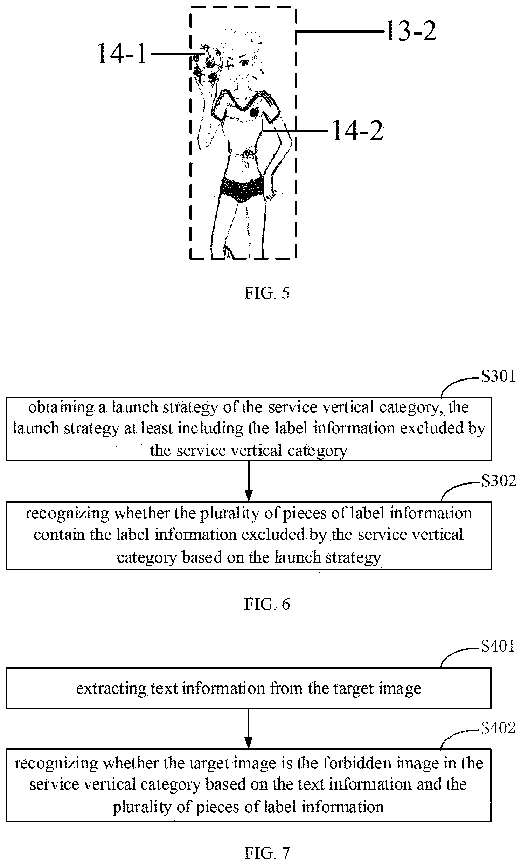

For example, as illustrated in FIG. 5, the recognition channels corresponding to the image segment 13-2 illustrated in FIG. 4 are the channel including the character recognition model and the channel including the item recognition model. In some embodiments, the image segment 13-2 may be first inputted into the recognition channel corresponding to the character recognition model, and the character recognition model labels the image segment 13-2 to obtain label information: football 14-1. Further, the image segment 13-2 may be inputted into the recognition channel corresponding to the item recognition model, and the item recognition model labels the image segment 13-2 to obtain label information: a sexy football baby 14-2.

As another possible implementation, the target image may be inputted into the recognition model, and then inputted into multiple sub-recognition models in the recognition model, and the target image may be labeled by the multiple sub-recognition models to obtain the multiple pieces of label information.

The sub-recognition model may include at least one of: a scene sub-recognition model, a character sub-recognition model, an item sub-recognition model, an animal sub-recognition model and so on.

With image moderation method according to embodiments of the disclosure, the at least one image segment may be obtained by segmenting the target image, and image recognition may be performed on the image segment to obtain the recognition channel corresponding to the image segment, then the image segment is inputted into the corresponding recognition channel, and the image segment is labeled by the recognition model corresponding to the recognition channel to obtain the multiple pieces of label information of the target image. In this way, with the disclosure, the image segment obtained by segmentation may be inputted into the at least one corresponding recognition channel, and the multiple of pieces of label information of the target image are obtained simultaneously, thereby achieving the purpose of labeling multiple labels for one target image, and further improving the flexibility and accuracy of image moderation.

It should be noted that, in the disclosure, when recognizing whether the multiple pieces of label information include label information excluded by the service vertical category, it may be recognized whether the multiple pieces of label information include the label information excluded by the service vertical category based on a launch strategy corresponding to the service vertical category.

As a possible implementation, as illustrated in FIG. 6, on the basis of the above embodiments, the process of recognizing whether the multiple pieces of label information include the label information excluded by the service vertical category at block S104 includes the following in detail.

At block S301, a launch strategy of the service vertical category is obtained. The launch strategy at least includes the label information excluded by the service vertical category.

In some embodiments of the disclosure, a user may upload the launch strategy of the service vertical category. Correspondingly, the launch strategy of the service vertical category may be received, and the label information excluded by the service vertical category is extracted.

At block S302, it is recognized whether the multiple pieces of label information contain the label information excluded by the service vertical category based on the launch strategy.

It should be noted that, when any piece of label information of the target image or a part of any piece of label information is the label information excluded by the service vertical category, it is recognized that the label information excluded by the service vertical category is contained in the multiple pieces of label information.

For example, the label information excluded by the teaching vertical category is sexy. At this time, if obtained label information of the target image is a sexy football baby or a sexy female teacher, both the recognition results are that the label information excluded by the teaching vertical category are contained.

With the image moderation method according to embodiments of the disclosure, the launch strategy of the service vertical category may be obtained. The launch strategy at least includes the label information excluded by the service vertical category. It is recognized whether the multiple pieces of label information contain the label information excluded by the service vertical category based on the launch strategy. In this way, with the disclosure, it may be flexibly recognized whether the multiple pieces of label information of the target image contain the label information excluded by the service vertical category based on the launch strategies corresponding to different service vertical categories, thereby dynamically moderating whether the target image is a forbidden image for different service vertical categories, obtaining different moderation results of the target image under the multiple service vertical categories, and further improving the flexibility and accuracy of image moderation.

It should be noted that, in the disclosure, in order to analyze the target image more comprehensively, on the basis of obtaining the multiple pieces of label information of the target image, text information in the target image may also be extracted, and then it is recognized whether the target image is a forbidden image in the service vertical category based on the multiple pieces of label information in combination with the text information of the target image.

As a possible implementation, as illustrated in FIG. 7, on the basis of the above embodiments, the process of recognizing whether the target image is the forbidden image in the service vertical category includes the following in detail.

At block S401, the text information in the target image is extracted.

In some embodiments, when the text information is extracted from the target image, an optical character recognition (OCR) method may be adopted to extract the text information from the target image, to obtain the text information of the target image.

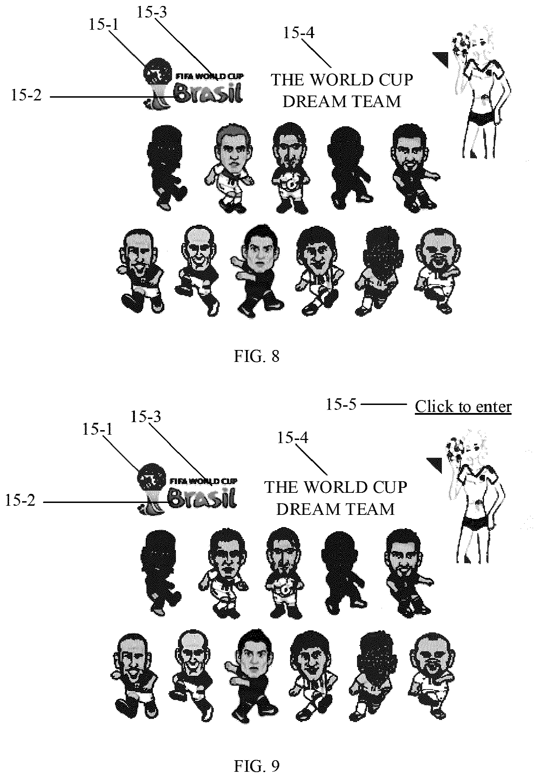

For example, as illustrated in FIG. 8, the text information in the target image may be extracted by the OCR method, to obtain the text information of the target image such as 2014 (year) 15-1, Brasil 15-2, FIFA WORD CUP 15-3 and THE WORLD CUP DREAM TEAM 15-4.

It should be noted that, when the text information is extracted from the target image, the anchor text information in a link may also be obtained by the OCR method in a case that the target image contains information such as the link.

For example, as illustrated in FIG. 9, the text information in the target image may be extracted by the OCR method to obtain the text information of the target image such as 2014 (year) 15-1, Brasil 15-2, FIFA WORD CUP 15-3, THE WORLD CUP DREAM TEAM 15-4 and an anchor text "Click to enter" 15-5.

At block S402, it is recognized whether the target image is the forbidden image in the service vertical category based on the text information and the multiple pieces of label information.

In some embodiments, the obtained text information and the multiple of pieces of label information may be compared with the label information excluded by the service vertical category. When it is recognized that the obtained text information or the multiple of pieces of label information contain the label information excluded by the service vertical category, the target image is checked as the forbidden image in the service vertical category. When it is recognized that neither the obtained text information nor the multiple of pieces of label information contains the label information excluded by the service vertical category, it is moderated that the target image is a qualified image in the service vertical category.

With the image moderation method according to embodiments of the disclosure, the text information is extracted from the target image, and it is recognized whether the target image is the forbidden image in the service vertical category based on the text information and the multiple pieces of label information. In this way, with the disclosure, by extracting the text information from the target image, it is recognized whether the target image is the forbidden image in the service vertical category based on the multiple pieces of label information of the target image in combination with the text information of the target image, such that the target image may be analyzed more comprehensively and accurately, and the flexibility and accuracy of image moderation are further improved.

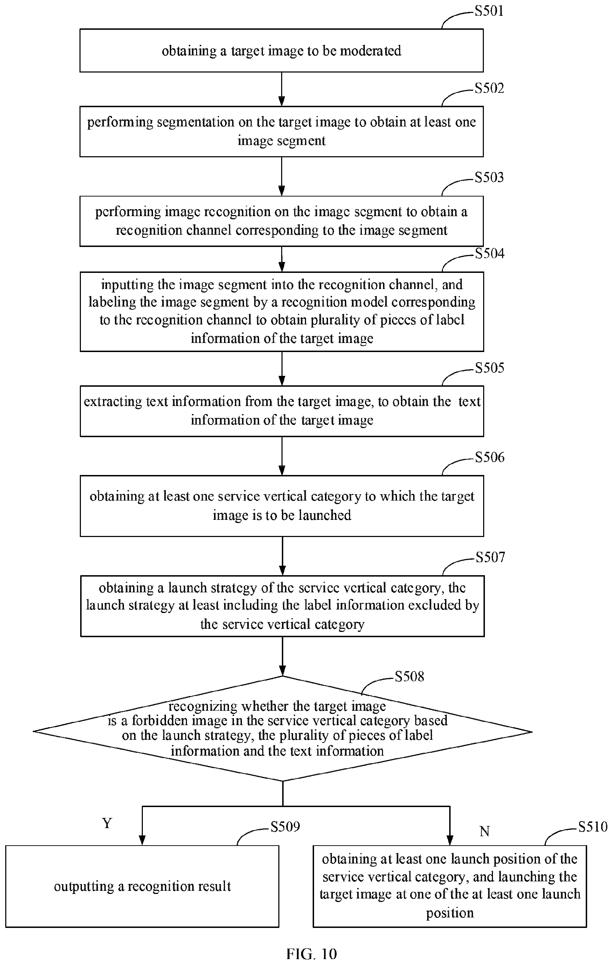

FIG. 10 is a flow chart according to a fifth embodiment of the disclosure. As illustrated in FIG. 10, on the basis of the above embodiments, the image moderation method may include the following.

At block S501, a target image to be moderated is obtained.

At block S502, segmentation is performed on the target image to obtain at least one image segment.

At block S503, image recognition is performed on the image segment to obtain a recognition channel corresponding to the image segment.

At block S504, the image segment is inputted into the recognition channel, and the image segment is labeled by a recognition model corresponding to the recognition channel to obtain multiple pieces of information of the target image.

At block S505, text information is extracted from the target image to obtain the text information of the target image.

At block S506, at least one service vertical category to which the target image is to be launched is obtained.

At block S507, a launch strategy of the vertical service category is obtained. The launch strategy at least includes label information excluded by the service vertical category.

At block S508, it is recognized whether the target image is a forbidden image in the service vertical category based on the launch strategy, the multiple pieces of label information and the text information.

In some embodiments, when it is recognized that the target image is the forbidden image in the service vertical category, the action at block S509 may be executed. When it is recognized that the target image is a non-forbidden image in the service vertical category, the action at block S510 may be executed.

At block S509, a recognition result is outputted.

It should be noted that, when the recognition result is outputted, text information or speech information such as "the picture is forbidden" or "the picture does not pass the moderation" may be outputted. Furthermore, while the recognition result is outputted, a reason why it is recognized that the target image is forbidden may also be outputted, to help the user replace the target image pertinently. For example, a prompt such as "This picture contains pornographic information and belongs to a forbidden image" may also be outputted.

At block S510, at least one launch position of the service vertical category is obtained, and the target image is launched at one of the at least one launch position.

In some embodiments, in a case that the target image is recognized to be the non-forbidden image in the service vertical category, the at least one launch position of the service vertical category may be obtained, and an instruction for opening the launch position is issued to launch the target image at one of the at least one launch position.

It should be noted that, the description at blocks S501∼S509 may refer to relevant records in the above embodiments, which is not elaborated here.

It should be noted that, the image moderation method provided in the disclosure may be applied to various scenes related to the field of image moderation.

For an application scene of automatic image moderation, after a target image is obtained by artificial intelligence (AI) technologies, labeling and text information extraction may be automatically performed on the target image by natural language processing technologies in combination with computer vision technologies. Then it may be recognized whether the target image is the forbidden image in the service vertical category based on the multiple pieces of label information and the text information to implement automatic moderation on the image. In this way, the process of automatic image moderation no longer depends on any manual intervention. The complete and thorough dynamic automatic image moderation may be implemented for different service vertical categories. The efficiency and accuracy of automatic image moderation is improved. The labor cost is greatly reduced.

For an application scene of a short video application, a target image uploaded by a user through a terminal such as a smart phone may be obtained, and labeling and text information extraction may be automatically performed on the target image. Then it is recognized whether the target image is the forbidden image in the service vertical category based on the multiple pieces of label information and the text information. Furthermore, when it is recognized that the target image uploaded by the user is the forbidden image, the reason why the target image is recognized as the forbidden image may be outputted while a recognition result is outputted, to help the user change the target image pertinently. In this way, a risk of the user failing to launch the target image as scheduled due to not familiar with an image moderation rule of the service vertical category or even being punished may be significantly reduced. Meanwhile, positive guidance for user's image uploading habit under the service vertical category are provided, which greatly improves the user experience

With the image moderation method according to embodiments of the disclosure, the target image to be moderated may be obtained. The target image is labeled to obtain the multiple pieces of label information of the target image. The at least one service vertical category to which the target image is to be launched is obtained. It is recognized whether the multiple pieces of label information contain the label information excluded by the service vertical category. It is determined that the target image is the forbidden image in the service vertical category in a case that the multiple pieces of label information contain the label information excluded by the service vertical category, thereby implementing moderation processing for the image. In this way, with the disclosure, by obtaining the multiple pieces of label information of the target image at the same time, it may be dynamically moderated for different service vertical categories whether the target image is forbidden, different moderation results of the target image under the multiple service vertical categories are obtained, thereby improving the flexibility and accuracy of image moderation, and achieving the purpose of appropriate image moderation for different service vertical categories.

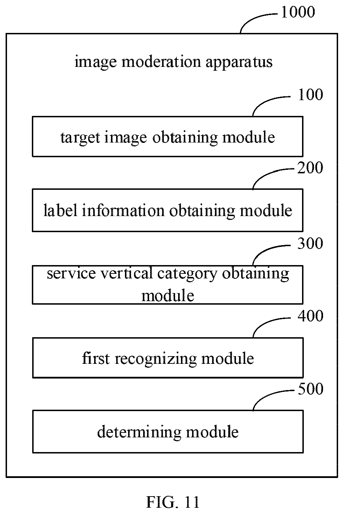

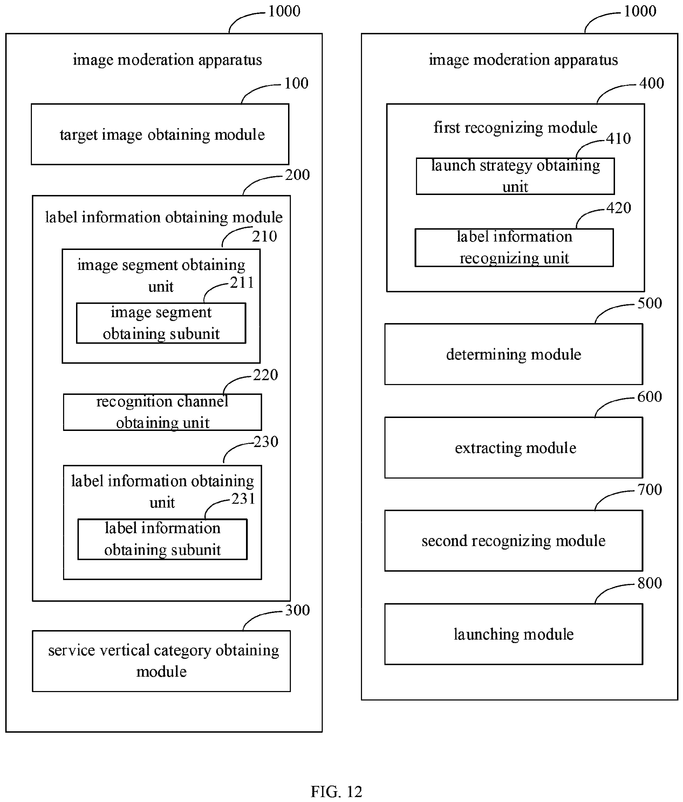

Corresponding to the image moderation method provided in the above embodiments, embodiments of the disclosure also provide an image moderation apparatus. Since the image moderation apparatus provided by embodiments of the disclosure corresponds to the image moderation method provided by the above embodiments, implementations of the image moderation method are also applicable to the image moderation apparatus provided in embodiments, which is not described in detail in this embodiment. FIG. 11 and FIG. 12 are block diagrams illustrating an image moderation apparatus for implementing an image moderation method according to embodiments of the disclosure.

As illustrated in FIG. 11, the image moderation apparatus 1000 includes: a target image obtaining module 100, a label information obtaining module 200, a service vertical category obtaining module 300, a first recognizing module 400, and a determining module 500.

The target image obtaining module 100 is configured to obtain a target image to be moderated.

The label information obtaining module 200 is configured to label the target image to obtain multiple pieces of label information of the target image.

The service vertical category obtaining module 300 is configured to obtain at least one service vertical category to which the target image is to be launched.

The first recognizing module 400 is configured to recognize whether the multiple pieces of label information contain label information excluded by the service vertical category.

The determining module 500 is configured to determine that the target image is a forbidden image in the service vertical category in a case that the multiple pieces of label information contain the label information excluded by the service vertical category.

In embodiments of the disclosure, as illustrated in FIG. 12, the label information obtaining module 200 in FIG. 11 includes: an image segment obtaining unit 210, a recognition channel obtaining unit 220, and a label information obtaining unit 230. The image segment obtaining unit 210 is configured to perform segmentation on the target image to obtain at least one image segment. The recognition channel obtaining unit 220 is configured to perform image recognition on the image segment to obtain a recognition channel corresponding to the image segment. The label information obtaining unit 230 is configured to input the image segment into the recognition channel, and to label the image segment by a recognition model corresponding to the recognition channel to obtain the multiple pieces of label information of the target image.

In embodiments of the disclosure, as illustrated in FIG. 12, the image segment obtaining unit 210 in FIG. 11 includes: an image segment obtaining subunit 211, configured to recognize at least one connected component of the target image, to obtain a relevance of contents in each connected domain, and to perform the segmentation on the target image based on the relevance to obtain the at least one image segment.

In embodiments of the disclosure, as illustrated in FIG. 12, the label information obtaining unit 230 in FIG. 11 include: a label information obtaining subunit, configured to input the target image into a recognition model, to input the target image into multiple sub-recognition models in the recognition model respectively, and to label the target image by the multiple sub-recognition models to obtain the multiple pieces of label information.

In embodiments of the disclosure, as illustrated in FIG. 12, the first recognizing module 400 in FIG. 11 includes: a launch strategy obtaining unit 410, and a label information recognizing unit 420. The launch strategy obtaining unit 410 is configured to obtain a launch strategy of the service vertical category. The launch strategy at least includes the label information excluded by the service vertical category. The label information recognizing unit 420 is configured to recognize whether the multiple pieces of label information contain the label information excluded by the service vertical category based on the launch strategy.

In embodiments of the disclosure, as illustrated in FIG. 12, the image moderation apparatus 1000 provided by the disclosure also include: an extracting module 600, and a second recognizing module 700. The extracting module 600 is configured to extract text information from the target image. The second recognizing module 700 is configured to recognize whether the target image is the forbidden image in the service vertical category based on the text information and the multiple pieces of label information.

In embodiments of the disclosure, as illustrated in FIG. 12, the image moderation apparatus 1000 provided by the disclosure also include: a launching module, configured to obtain at least one launch position of the service vertical category, and to launch the target image at one of the at least one launch position in a case that the target image in the service vertical category is a non-forbidden image.

With the image moderation apparatus according to embodiments of the disclosure, the target image to be moderated may be obtained. The target image is labeled to obtain the multiple pieces of label information of the target image. The at least one service vertical category to which the target image is to be launched is obtained. It is recognized whether the multiple pieces of label information contain the label information excluded by the service vertical category. It is determined that the target image is the forbidden image in the service vertical category in a case that the multiple pieces of label information contain the label information excluded by the service vertical category, thereby implementing moderation processing for the image. In this way, with the disclosure, by obtaining the multiple pieces of label information of the target image at the same time, it may be dynamically moderated for different service vertical categories whether the target image is forbidden, different moderation results of the target image under the multiple service vertical categories are obtained, thereby improving the flexibility and accuracy of image moderation, and achieving the purpose of appropriate image moderation for different service vertical categories.

According to embodiments of the disclosure, the disclosure also provides an electronic device and a readable storage medium.

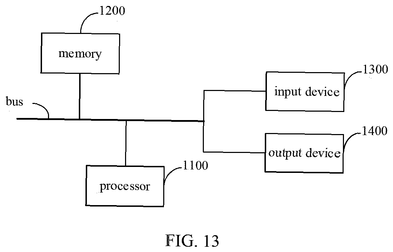

As illustrated in FIG. 13, FIG. 13 is a block diagram illustrating an electronic device for implementing an image moderation method according to embodiments of the disclosure. The electronic device aims to represent various forms of digital computers, such as a laptop computer, a desktop computer, a workstation, a personal digital assistant, a server, a blade server, a mainframe computer and other suitable computer. The electronic device may also represent various forms of mobile devices, such as personal digital processing, a cellular phone, a smart phone, a wearable device and other similar computing device. The components, connections and relationships of the components, and functions of the components illustrated herein are merely examples, and are not intended to limit the implementation of the disclosure described and/or claimed herein.

As illustrated in FIG. 13, the electronic device includes: one or more processors 1100, a memory 1200, and interfaces for connecting various components, including a high-speed interface and a low-speed interface. Various components are connected to each other via different buses, and may be mounted on a common main board or in other ways as required. The processor may process instructions executed within the electronic device, including instructions stored in or on the memory to display graphical information of the GUI (graphical user interface) on an external input/output device (such as a display device coupled to an interface). In other implementations, multiple processors and/or multiple buses may be used together with multiple memories if desired. Similarly, multiple electronic devices may be connected, and each device provides some necessary operations (for example, as a server array, a group of blade servers, or a multiprocessor system). In FIG. 13, a processor 1100 is taken as an example.

The memory 1200 is a non-transitory computer readable storage medium provided by the disclosure. The memory is configured to store instructions executable by at least one processor, to enable the at least one processor to execute the image moderation method provided by the disclosure. The non-transitory computer readable storage medium provided by the disclosure is configured to store computer instructions. The computer instructions are configured to enable a computer to execute the image moderation method provided by the disclosure.

As the non-transitory computer readable storage medium, the memory 1200 may be configured to store non-transitory software programs, non-transitory computer executable programs and modules, such as program instructions/module (such as the target image obtaining module 100, the label information obtaining module 200, the service vertical category obtaining module 300, the first recognizing module 400, and the determining module 500 illustrated in FIG. 11) corresponding to the image moderation method according to embodiments of the disclosure. The processor 1100 is configured to execute various functional applications and data processing of the server by operating non-transitory software programs, instructions and modules stored in the memory 1200, that is, implements the image moderation method according to the above method embodiments.

The memory 1200 may include a storage program region and a storage data region. The storage program region may store an application required by an operating system and at least one function. The storage data region may store data created according to predicted usage of the electronic device. In addition, the memory 1200 may include a high-speed random access memory, and may also include a non-transitory memory, such as at least one disk memory device, a flash memory device, or other non-transitory solid-state memory device. In some embodiments, the memory 1200 may optionally include memories remotely located to the processor 1100, and these remote memories may be connected to the electronic device via a network. Examples of the above network include, but are not limited to, an Internet, an intranet, a local area network, a mobile communication network and combinations thereof.

The electronic device capable of implementing the image moderation method may also include: an input device 1300 and an output device 1400. The processor 1100, the memory 1200, the input device 1300, and the output device 1400 may be connected via a bus or in other means. In FIG. 13, the bus is taken as an example.

The input device 1300 may receive inputted digital or character information, and generate key signal input related to user setting and function control of the electronic device, such as a touch screen, a keypad, a mouse, a track pad, a touch pad, an indicator stick, one or more mouse buttons, a trackball, a joystick and other input device. The output device 1400 may include a display device, an auxiliary lighting device (e.g., LED), a haptic feedback device (e.g., a vibration motor), and the like. The display device may include, but be not limited to, a liquid crystal display (LCD), a light emitting diode (LED) display, and a plasma display. In some embodiments, the display device may be the touch screen.

The various implementations of the system and technologies described herein may be implemented in a digital electronic circuit system, an integrated circuit system, an application specific ASIC (application specific integrated circuit), a computer hardware, a firmware, a software, and/or combinations thereof. These various implementations may include: being implemented in one or more computer programs. The one or more computer programs may be executed and/or interpreted on a programmable system including at least one programmable processor. The programmable processor may be a special purpose or general purpose programmable processor, may receive data and instructions from a storage system, at least one input device, and at least one output device, and may transmit data and the instructions to the storage system, the at least one input device, and the at least one output device.

These computing programs (also called programs, software, software applications, or codes) include machine instructions of programmable processors, and may be implemented by utilizing high-level procedures and/or object-oriented programming languages, and/or assembly/machine languages. As used herein, the terms "machine readable medium" and "computer readable medium" refer to any computer program product, device, and/or apparatus (such as, a magnetic disk, an optical disk, a memory, a programmable logic device (PLD)) for providing machine instructions and/or data to a programmable processor, including a machine readable medium that receives machine instructions as a machine readable signal. The term "machine readable signal" refers to any signal for providing the machine instructions and/or data to the programmable processor.

To provide interaction with a user, the system and technologies described herein may be implemented on a computer. The computer has a display device (such as, a CRT (cathode ray tube) or a LCD (liquid crystal display) monitor) for displaying information to the user, a keyboard and a pointing device (such as, a mouse or a trackball), through which the user may provide the input to the computer. Other types of devices may also be configured to provide interaction with the user. For example, the feedback provided to the user may be any form of sensory feedback (such as, visual feedback, auditory feedback, or tactile feedback), and the input from the user may be received in any form (including acoustic input, voice input or tactile input).

The system and technologies described herein may be implemented in a computing system including a background component (such as, a data server), a computing system including a middleware component (such as, an application server), or a computing system including a front-end component (such as, a user computer having a graphical user interface or a web browser through which the user may interact with embodiments of the system and technologies described herein), or a computing system including any combination of such background component, the middleware components and the front-end component. Components of the system may be connected to each other via digital data communication in any form or medium (such as, a communication network). Examples of the communication network include a local area network (LAN), a wide area networks (WAN), and the Internet.

The computer system may include a client and a server. The client and the server are generally remote from each other and generally interact via the communication network. A relationship between the client and the server is generated by computer programs operated on a corresponding computer and having a client-server relationship with each other.

With the image moderation method according to embodiments of the disclosure, the target image to be moderated may be obtained. The target image is labeled to obtain the multiple pieces of label information of the target image. The at least one service vertical category to which the target image is to be launched is obtained. It is recognized whether the multiple pieces of label information contain the label information excluded by the service vertical category. It is determined that the target image is the forbidden image in the service vertical category in a case that the multiple pieces of label information contain the label information excluded by the service vertical category, thereby implementing moderation processing for the image. In this way, with the disclosure, by obtaining the multiple pieces of label information of the target image at the same time, it may be dynamically moderated for different service vertical categories whether the target image is forbidden, different moderation results of the target image under the multiple service vertical categories are obtained, thereby improving the flexibility and accuracy of image moderation, and achieving the purpose of appropriate image moderation for different service vertical categories.

It should be understood that, steps may be reordered, added or deleted by utilizing flows in the various forms illustrated above. For example, the steps described in the disclosure may be executed in parallel, sequentially or in different orders, so long as desired results of the technical solution disclosed in the disclosure may be achieved, there is no limitation here.

The above detailed implementations do not limit the protection scope of the disclosure. It should be understood by the skilled in the art that various modifications, combinations, subcombinations and substitutions may be made based on design requirements and other factors.

## Claims

1. An image moderation method, comprising:
obtaining (S101, S501) a target image to be moderated;
labeling (S102) the target image to obtain a plurality of pieces of label information of the target image;
obtaining (S103, S506) at least one service vertical category to which the target image is to be launched;
recognizing (S104) whether the plurality of pieces of label information contain label information excluded by the service vertical category; and
determining (S105) that the target image is a forbidden image in the service vertical category in a case that the plurality of pieces of label information contain the label information excluded by the service vertical category.

2. The method of claim 1, wherein labeling (SI02) the target image to obtain the plurality of pieces of label information of the target image comprises:
performing (S201, S502) segmentation on the target image to obtain at least one image segment;
performing (S202, S503) image recognition on the image segment to obtain a recognition channel corresponding to the image segment; and
inputting (S203, S504) the image segment into the recognition channel, and labeling the image segment by a recognition model corresponding to the recognition channel to obtain the plurality of pieces of label information of the target image.

3. The method of claim 2, wherein performing (S201, S502) the segmentation on the target image to obtain the at least one image segment comprises:
recognizing at least one connected component of the target image, obtaining a relevance of contents in each connected domain, and performing the segmentation on the target image based on the relevance to obtain the at least one image segment.

4. The method of claim 1, wherein labeling (SI02) the target image to obtain the plurality of pieces of label information of the target image comprises:
inputting the target image into a recognition model, inputting the target image into a plurality of sub-recognition models in the recognition model respectively, and labeling the target image by the plurality of sub-recognition models to obtain the plurality of pieces of label information.

5. The method of any of claims 1 to 4, wherein recognizing (SI04) whether the plurality of pieces of label information contain the label information excluded by the service vertical category comprises:
obtaining (S301, S507) a launch strategy of the service vertical category, the launch strategy at least comprising the label information excluded by the service vertical category; and
recognizing (S302) whether the plurality of pieces of label information contain the label information excluded by the service vertical category based on the launch strategy.

6. The method of any of claims 1-5, further comprising:
extracting (S401, S505) text information from the target image; and
recognizing (S402) whether the target image is the forbidden image in the service vertical category based on the text information and the plurality of pieces of label information.

7. The method of any of claims 1-6, further comprising:
in a case that the target image is a non-forbidden image in the service vertical category, obtaining (S510) at least one launch position of the service vertical category, and launching the target image at one of the at least one launch position.

8. An image moderation apparatus (1000), comprising:
a target image obtaining module (100), configured to obtain a target image to be moderated;
a label information obtaining module (200), configured to label the target image to obtain a plurality of pieces of label information of the target image;
a service vertical category obtaining module (300), configured to obtain at least one service vertical category to which the target image is to be launched;
a first recognizing module (400), configured to recognize whether the plurality of pieces of label information contain label information excluded by the service vertical category; and
a determining module (500), configured to determine that the target image is a forbidden image in the service vertical category in a case that the plurality of pieces of label information contain the label information excluded by the service vertical category.

9. The apparatus of claim 8, wherein the label information obtaining module (200) comprises:
an image segment obtaining unit (210), configured to perform segmentation on the target image to obtain at least one image segment;
a recognition channel obtaining unit (220), configured to perform image recognition on the image segment to obtain a recognition channel corresponding to the image segment; and
a label information obtaining unit (230), configured to input the image segment into the recognition channel, and to label the image segment by a recognition model corresponding to the recognition channel to obtain the plurality of pieces of label information of the target image.

10. The apparatus of claim 9, wherein the image segment obtaining unit (210) comprises:
an image segment obtaining subunit (211), configured to recognize at least one connected component of the target image, to obtain a relevance of contents in each connected domain, and to perform the segmentation on the target image based on the relevance to obtain the at least one image segment.

11. The apparatus of claim 9, wherein the label information obtaining unit (230) comprises:
a label information obtaining subunit (231), configured to input the target image into a recognition model, to input the target image into a plurality of sub-recognition models in the recognition model respectively, and to label the target image by the plurality of sub-recognition models to obtain the plurality of pieces of label information.

12. The apparatus of any of claims 8 to 11, wherein the first recognizing module (400) comprises:
a launch strategy obtaining unit (410), configured to obtain a launch strategy of the service vertical category, the launch strategy at least comprising the label information excluded by the service vertical category; and
a label information recognizing unit (420), configured to recognize whether the plurality of pieces of label information contain the label information excluded by the service vertical category based on the launch strategy.

13. An electronic device, comprising:
at least one processor; and
a memory, communicatively coupled to the at least one processor,
wherein the memory is configured to store instructions executable by the at least one processor, and when the instructions are executed by the at least one processor, the at least one processor is caused to execute the image moderation method according to any one of claims 1 to 7.

14. A non-transitory computer readable storage medium having computer instructions stored thereon, wherein the computer instructions are configured to cause a computer to execute the image moderation method according to any one of claims 1 to 7.

15. A computer program product having computer instructions stored thereon, wherein the computer instructions are configured to cause a computer to execute the image moderation method according to any one of claims 1 to 7.
